# EUROPEAN PATENT APPLICATION

(11) **EP 4 520 781 A1**
(43) Date of publication of application: **12.03.2025**
(21) Application number: 24198386.5
(22) Date of filing: 04.09.2024
(51) Int. Cl.: C08K 3/013, C08K 3/22, H01M 50/122

(54) **THERMALLY STABLE, FIRE RESISTANT THERMOPLASTIC POLYMER COMPOSITION FOR HEAT/FIRE PROPAGATION APPLICATIONS**

(30) Priority: 05.09.2023 US 202318460767
(71) Applicant: TE Connectivity Solutions GmbH, 8200 Schaffhausen (CH)
(72) Inventor: Tao, Dejie, Fremont, CA 94555 (US); Wang, Lei, Fremont, CA 94555 (US); Wu, Yiliang, Fremont, CA 94555 (US); Gao, Ting, Fremont, CA 94555 (US)
(74) Representative: Ashton, Gareth Mark

(57) **Abstract**

A thermally stable, flame resistant thermoplastic polymer composition for heat/fire applications is disclosed. The thermoplastic polymer composition comprises a thermoplastic polymer and at least one ceramifiable filler. The thermoplastic polymer composition can include additional additives. This thermoplastic polymer composition can be easily processed, is thermally stable and maintains its mechanical and insulation properties.

## Description

### FIELD OF THE INVENTION

The present invention relates to a thermoplastic polymer composition used in heat/fire propagation applications. In particular, the invention is directed to a thermoplastic polymer composition comprising a thermoplastic polymer and at least one ceramifiable filler. The thermoplastic polymer composition can include additional additives, as desired. The resulting thermoplastic polymer composition is thermally stable, fire resistant and maintains its insulation capability after being exposed to heat or flame.

### BACKGROUND OF THE INVENTION

There are many applications that require the underlying materials to withstand high heat as well as to avoid fire propagation. This is especially true in objects with electronics where thermal runaway may result. Thermal runaway is a process that is accelerated by increased temperature which in turn releases energy and further increases the temperature. Thermal runaway can be associated with exothermic reactions or increased power flow and power dissipation. This is a risk particularly found when lithium batteries are used in components. Thermal runaway results in ejection of gases, higher temperature, flames as well as smoke.

Ceramic materials can be used to prevent thermal runaway. However, ceramic materials are not flexible, low cost or easy to manufacture. Therefore, there is a need for a thermally stable, fire resistant material which can be manufactured easily that avoids these issues. Preferably, the material is a polymeric material with at least one ceramifiable filler.

U.S. Patent No. 5,707,734 describes a polymer composite having enhanced flame retardant behavior. The composite includes a polymer and glass fibers coated with a fumed silica. The polymer can be selected from a wide variety of polymers, including polybutylene, polyethylene terephthalates, polycarbonates, polyethylenes, polypropylenes, nylons and mixtures of these polymers.

In the articles, Flame Retardant Mechanism of Silica Gel/Silica, (Fire and Materials, Vol. 24, No. 6, 277-289, November/December 2000) Kashiwagi et. al. studied various types of silica, silica gel, fumed silicas and fused silicas in polypropylene and polyethylene oxide to determine their flame retardant effectiveness and mechanisms. Fumed silicas and silica gel used in the study accumulated near the surface of the polymer when subject to flame acts as a thermal insulation layer and a barrier to the transport of degradative products to the surface.

US Patent No. 6,774,159B2 describes a composition possessing high resistance to fire propagation. The composition comprises a base polymer and a fireproofing additive containing a metal hydroxide. The composition avoids problems with metal hydroxides, namely high viscosity and reduced mechanical characteristics.

US Patent Publication No. US2009/0326108A1 describes a halogen-free flame retardant thermoplastic polyurethane composition. The flame retardant thermoplastic polyurethane composite resin composition is capable of improving flame retardancy and flaming-drip of the thermoplastic polyurethane resin through the desirable formation of char during combustion. The halogen-free flame retardant used was a phosphinate, a diphosphinate, dipenttaerythritol, talc, or a melamine derivative.

In the article, "Influence of Fumed Silica on Flame-Retardant Properties of Ethylene Vinyl Acetate/Aluminum Hydroxide Composites", published in 2010 in the Journal of Applied Polymer Science (https://dpo.org/10.1002/app.33126), the authors describe the flammability and synergistic flame-retardant effects of fumed silica. The results according to the authors show that the addition of fumed silica improves the UL 94 rating of the composite. In addition, the cone calorimeter testings showed that the addition of fumed silica greatly reduced the heat release rate from the composite when exposed to flames.

In a 2012 article "Thermal Stability of High Density Polyethylene Fumed Silica Nanocomposites", published in August 2012, in the Journal of Thermal Analysis and Calorimetry, Vol. 109, Issue 2, Dorigato et al. describe how high-density polyethylene based nanocomposites were prepared through melt compounding by using surface functionalized fumed silica nanoparticles. These materials were investigated to determine their capability to improve mechanical properties and resistance to thermal degradation. Thermogravimetric analysis showed that the selected nanoparticles were effective in increasing the decomposition temperature and decreasing the mass loss rate. The formation of a char enriched layer was responsible for limiting the diffusion of oxygen through the samples. Cone calorimeter tests revealed the efficacy of functionalized nanoparticles in delaying the time to ignition and decreasing the heat release rate values. The data showed that functional fumed silica nanoparticles could provide an effective way to enhance the flammability properties of polyolefins.

US Patent Publication No. US2015/0152222A1 describes a flame retardant thermoplastic polyurethane composition comprising a non-halogen flame retardant. The thermoplastic polyurethane compositions are useful for applications where high flame performance and low smoke properties as well as high tensile strength are desirable such as wire and cable applications, film applications and molding applications.

US Patent Publication No. US 2015/0170789A1 describes a fire resistant composition. The fire resistant composition includes at least one polymer and at least one ceramifying material. The composition includes no materials that produce significant ionic conductivity on melting below a threshold temperature and include substantially no magnesium hydroxide, Mg(OH)₂.

In a 2019 article, "Synergistic Effects of Metal Hydroxides and Fumed Nanosilica as Fire Retardants for Polyethylene", published in Flame Retardancy and Thermal Stability of Materials, 2:30-48, Fredi et al. describe the effects of aluminum/magnesium hydroxide microfillers and organomodified fumed silica nanoparticles for liner low-density polyethylene. The authors have found the rise in viscosity contributes to the synergistic affect between the metal hydroxides and nanosilica. The authors conclude that metal hydroxides and fumed nanosilica enhances the mechanical properties and fire performance of the polyethylene.

US Patent No. 10,854,356B2 describes a fire resistant cable with a ceramifiable layer. The applicant describes a composition based upon a mixture of specific thermoplastic ethylene polymers, silica as a filler and hydrated magnesium silicate at the stabilizing agent. The composition can be used for manufacturing a cable which has suitable mechanical performance in operation and is effective for maintaining the cable in operating condition in the presence of fire and mechanical stress.

Even with all these advances, there exists a need for thermoplastic polymer materials with improved fire propagation resistance and, and thermal stability which can be easily processed while still preserving the underlying mechanical properties of the polymer.

### SUMMARY OF THE INVENTION

An embodiment is directed to thermally stable, fire resistant thermoplastic polymer composition comprising a thermoplastic polymer and at least one ceramifiable filler.

An embodiment is directed to the process of forming a thermally stable, fire resistant thermoplastic polymer comprising a thermoplastic polymer and at least one ceramifiable filler.

Another embodiment is directed to the use of a thermally stable, fire resistant thermoplastic polymer composition comprising a thermoplastic polymer and at least one ceramifiable filler in objects which may be subject to overheating or exposure to fire.

Yet another embodiment is directed to a battery enclosure made from a thermally stable, fire resistant thermoplastic polymer comprising a polymer and at least one ceramifiable filler.

Other features and advantages of the present invention will be apparent from the following more detailed description of the preferred embodiment, taken in conjunction with the accompanying figure which illustrate, by way of example, the principles of the invention.

### BRIEF DESCRIPTION OF THE DRAWINGS

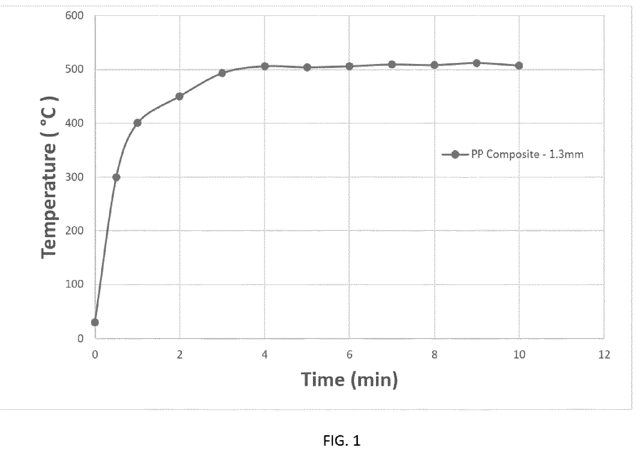

FIG. 1 is a graph showing the temperature change over time of the top part of a plaque made from the polymer composition of the instant invention when exposed to a flame on the bottom part of the plaque.

### DETAILED DESCRIPTION OF THE INVENTION

The description of illustrative embodiments according to principles of the present invention is intended to be read in connection with the accompanying figure, which is to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The thermally stable, fire resistant composition comprises a thermoplastic polymer and at least one ceramifiable filler and optionally other additives. The thermoplastic polymer used in the composition can be a thermoplastic polymer, a crosslinked thermoplastic polymer, or mixtures thereof.

The thermoplastic polymer can be amorphous or semicrystalline. Examples of suitable thermoplastic polymers include but are not limited to: (i) a polyolefin (PO), such as polyethylene (PE), polypropylene (PP), polybutene, ethylene propylene rubber (EPR), polyoxyethylene (POE), cyclic olefin copolymer (COC), or combinations thereof; (ii) a styrenic polymer, such as polystyrene (PS), acrylonitrile butadiene styrene (ABS), styrene acrylonitrile (SAN), styrene butadiene rubber (SBR or HIPS), polyalphamethylstyrene, styrene maleic anhydride (SMA), styrene-butadiene copolymer (SBC) (such as styrene-butadiene-styrene copolymer (SBS) and styrene-ethylene/butadiene-styrene copolymer (SEBS)), styrene-ethylene/propylene-styrene copolymer (SEPS), styrene butadiene latex (SBL), SAN modified with ethylene propylene diene monomer (EPDM) and/or acrylic elastomers (for example, PS-SBR copolymers), or combinations thereof; (iii) a thermoplastic polyurethane (TPU) other than those described above; (iv) a polyamide, such as polyamide 6 (PA6), polyamide 6,6 (PA66), polyamide 1,1 (PA11), polyamide 1,2 (PA12), a copolyamide (COPA), or combinations thereof; (v) an acrylic polymer, such as polymethyl acrylate, polymethylmethacrylate, a methyl methacrylate styrene (MS) copolymer, or combinations thereof; (vi) a polyvinylchloride (PVC), a chlorinated polyvinylchloride (CPVC), or combinations thereof; (vii) a polyoxymethylene, such as polyacetal; (viii) a polyester, such as polyethylene terephthalate (PET), polybutylene terephthalate (PBT), copolyesters and/or polyester elastomers (COPE) including polyether-ester block copolymers such as glycol modified polyethylene terephthalate (PETG), polylactic acid (PLA), polyglycolic acid (PGA), copolymers of PLA and PGA, or combinations thereof; (ix) a polycarbonate (PC), a polyphenylene sulfide (PPS), a polyphenylene oxide (PPO); or combinations thereof.

Additional non-limiting examples of commercially used thermoplastic polymers include poly(vinyl halides), polyvinyl alcohols, polynitriles, polyacetals, polyimides, polyarylketones, polyetherketones, polyhydroxyalkanoates, polycaprolactones, polysulfones, polyphenylene oxides, polyacetates, liquid crystal polymers, fluoropolymers, ionomeric polymers, thermoplastic elastomers, and copolymers of any of them and combinations of any two or more of them.

Non-limiting examples of specific commercial thermoplastic polymers include acrylonitrile butadiene styrene (ABS), polymethyl methacrylate (PMMA), cellulose acetate, cyclic olefin copolymer (COC), ethylene-vinyl acetate (EVA), ethylene vinyl alcohol (EVOH), polytetrafluoroethane (PTFE), ionomers, polyoxymethylene (POM or Acetal), polyacrylonitrile (PAN), polyamide 6, polyamide 6,6, polyamide-imide (PAI), polyaryletherketone (PAEK), polybutadiene (PBD), polybutylene (PB), polybutylene terephthalate (PBT), polycaprolactone (PCL), polychlorotrifluoroethylene (PCTFE), polyethylene terephthalate (PET), polycyclohexylene dimethylene terephthalate (PCT), polycarbonate (PC), polyhydroxybutyrate (PHB), polyethylene (PE), polyetheretherketone (PEEK), polyetherketoneketone (PEKK), polyetherimide (PEI), polyethersulfone (PES), chlorinated polyethylene (CPE), polyimide (PI), polylactic acid (PLA), polymethylpentene (PMP), polyphenylene oxide (PPO), polyphenylene sulfide (PPS), polyphthalamide (PPA), polypropylene (PP), polysulfone (PSU), polytrimethylene terephthalate (PTT), polyurethane (PU), polyvinyl acetate (PVA), polyvinyl chloride (PVC), polyvinylidene chloride (PVDC), and styrene-acrylonitrile (SAN).

The thermally stable fire resistant thermoplastic polymer composition must include at least one ceramifiable filler and optionally other desired additives. Examples of other suitable additives include electrically conductive fillers, reinforcing fillers, phosphorus-based flame retardants, and synergists, as well as other conventional additives used in the processing of polymers.

The thermally stable fire resistant thermoplastic polymer composition includes at least one ceramifiable filler. The ceramifiable filler can include any type of filler which can react with the other fillers when exposed to fire or a high temperature (greater than or equal to 500°C) to form inorganic residue and ceramic layer. Examples of ceramifiable fillers include but are not limited to magnesium carbonate, sodium bicarbonate, and potassium bicarbonate. In one embodiment, the ceramifiable filler can be a flame retardant. The flame retardants are preferably halogen free, environmentally safe, and non-toxic. These ceramifiable fillers substantially reduce the amount of smoke released by the underlying polymer and reduce the damage that is suffered by such polymer when exposed to fire. The ceramifiable filler can include at least one silica based flame retardant. An example of a silica based flame retardant is fumed silica. Aerosil^{RTM} fumed silica from Evonik is an example of a commercially available fumed silica. Other flame retardants that can be used as ceramifiable fillers include metal oxides and metal hydroxides such as magnesium hydroxide, aluminum hydroxide and calcium dihydroxide and magnesium oxide. In one embodiment, preferably, the ceramifiable filler is a combination of fumed silica, magnesium hydroxide, aluminum hydroxide and calcium dihydroxide. In one embodiment, a ceramifiable filler comprises the magnesium hydroxide in the range of about 20 to 98 weight %, the aluminum hydroxide in the range of about 0 to about 40 weight %, the calcium dihydroxide in the range of about 0 to about 40 weight % and the fumed silica in the range of about 2 to about 30 weight %, all weights being of the total ceramifiable filler. In yet another embodiment, the ceramifiable filler can comprise aluminum polyphosphate with fumed silica.

Reinforcing fillers can be used in the thermally stable, fire resistant thermoplastic polymer composition. Examples of reinforcing fillers include: carbon fibers, glass fibers, ceramic fibers, whiskers, polymer fibers, nano fibers or nano hollow fibers, as well as blends thereof. These reinforcing fillers help improve the strength and dimensional stability of the thermally stable, fire resistant polymer composition when it is subject to a flame.

Carbon fibers which can be used in the instant invention include but are not limited to: carbon nanotubes and carbon fiber. Generally, these carbon fibers improve the heat resistance of the polymer composition and may be burned off after the composition is subject to fire. Any known carbon fiber can be used in the instant invention. Typically, the carbon fiber has a nominal diameter of about 1 to about 50 microns, preferably from about 5 to about 20 microns. The amount of carbon fiber which can be used in the thermally stable, fire resistant polymer composition is in the range about 0 to about 50 volume percent of the total polymer composition.

Glass fibers which can also be added to the thermally stable fire resistant thermoplastic polymer composition as a reinforcing filler. Examples of such glass fibers include but are not limited to chopped glass fibers, continuous glass fibers, milled glass, glass balls as well as glass beads. Any known glass fiber can be used in the instant invention. Typically, the glass fiber has a nominal diameter of about 1 to about 50 microns, preferably from about 5 to about 20 microns. The amount of glass fiber used in the thermally stable, fire resistant polymer composition is in the range about 0 to about 50 volume percent of the total polymer composition.

Similarly, ceramic fibers can also be added to the thermally stable fire resistant thermoplastic polymer composition. Ceramic fibers can be oxide based ceramic fibers or non-oxide based ceramic fibers or blends thereof. Examples of oxide based ceramic fibers include but are not limited to Al₂O₃, SiO₂, Al₂O₃- SiO₂ or ZrO₂. Examples of non-oxide based ceramic fibers include but are not limited to SiC, BN, or Si₃N₄. The amount of ceramic fiber that can be used in the thermally stable fire resistant polymer composition ranges from about 0 to about 50 volume percent of the total polymer composition.

In addition, the thermally stable fire resistant thermoplastic polymer composition may include polymer fibers as reinforcing fillers. Examples of suitable polymer fibers include aramid fibers and continuous polyethylene fibers. Any known polymer fiber can be used in the instant invention. Typically, the polymer fiber has a nominal diameter of about 1 to about 50 microns, preferably from about 5 to about 20 microns. The polymer fiber used in the thermally stable, fire resistant polymer composition in the range about 0 to about 50 volume percent.

The thermally stable fire resistant thermoplastic polymer composition can also include nano fibers or nano hollow fibers as reinforcing fillers. Examples of such fibers include but are not limited to carbon nano-tube, graphene, graphite nanoplatelets and Dragonite^{RTM} halloysite (aluminosilicate clay) (available from Applied Minerals, Inc.). The nanotube has a diameter in the range of about 0.1 to about 100 nanometers, preferably from about 0.4 to about 40 nanometers.

In addition, bromine or phosphorus based flame retardant package may be added to the thermally stable, flame resistant thermoplastic polymer composition as a synergist. The addition of the synergist helps boost char formation and maintain the integrity of the thermally stable fire resistant thermoplastic polymer composition when subject to flames or high temperature.

Other conventional additives may be added to the thermally stable fire resistant thermoplastic polymer composition. Examples of conventional additives include pigments, dyes, voiding agents, antistatic agents, foaming agents, plasticizers, radical scavengers, antiblocking agents, anti-dust agents, antifouling agents, surface active agents, slip aids, optical brighteners, plasticizers, viscosity modifiers, gloss improvers, dispersion stabilizers, UV stabilizers, UV absorbers, antioxidants, lubricity agents, heat stabilizers, hydrolysis stabilizers, cross-linking activators, coupling agents, layered silicates, radio opacifiers, such as barium sulfate, tungsten metal, non-oxide bismuth salts, fillers, colorants, reinforcing agents, adhesion promoters (such as for example, but not limited to, 2-hydroxyethyl-methacrylate- phosphate), impact strength modifiers, and any combination thereof. Such additives may be included in conventional amounts.

In addition, the thermally stable fire resistant thermoplastic polymer composition may be subject to crosslinking. The thermoplastic polymers composition can be crosslinked using heat, crosslinking agents or radiation crosslinking. Any thermoplastic polymer which can be crosslinked easily can be used in the instant invention. Crosslinked thermoplastics maintain their mechanical properties better than thermoplastic polymers which are not crosslinked after being exposed to fire.

One method of obtaining a crosslinked thermoplastic polymer composition is using heat. In one embodiment, the thermoplastic polymer can be heated from about 70 ° to about 250° C to obtain the desired crosslinking. An example of a thermoplastic polymer that can be crosslinked by heat is polyacrylonitrile.

In addition to heat, the thermoplastic polymer composition can be crosslinked using a crosslinking agent. Examples of crosslinking agents include chemicals, monomers or polymers having more than one homo- or hetero-functional group, capable of linking two or more binder polymer strands, two or more particles and capable of linking polymer strands and particles to each other and to the surface. In some embodiments of the present invention, the crosslinking agent has more than one radical generating moiety, such as aryl ketone, azide, peroxide, diazo, carbene or nitrene generator. In other embodiments, the crosslinking agent has more than one reactive group such as vinyl, carboxy, ester, epoxy, hydroxyl, amido, amino, thio, N-hydroxy succinimide, isocyanate, anhydride, azide, aldehyde, cyanuryl chloride or phosphine that can thermochemically react with functionalized binder polymer. In addition, the product of the instant invention can be crosslinked using radical generators. Radical generators can form new bonds through radical-radical combination, addition to unsaturated bonds, hydrogen abstraction and subsequent recombination, as well as possible electron transfer reactions. Examples of radical initiators include benzophenone, acetophenone derivatives, peroxides, peroxy compounds, benzoin derivatives, benzylketals, hydroxyalkylphenones and aminoalkylphenones, O-acyl oximoketones, acylphosphine oxides and acylphosphonates, thiobenzoic S-esters, azo and azide compounds, triazines, 1,2 diketones, quinones, coumarins, xanthones. In one embodiment, the crosslinking agent is triallyl isocyanurate (TAIC).

Further, the thermoplastic polymer composition can be crosslinked using radiation crosslinking. Radiation crosslinking occurs where the thermoplastic polymer is exposed to an agent such as UV light, electron beam, or gamma-radiation with or without additional crosslinking agents or substances. If radiation is used as the crosslinking agent, the product is exposed to radiation in the range of 50 kGy to 1100 kGy, preferably 50 to 300 kGy to obtain the desired crosslinking.

In another aspect, the invention relates to the preparation of the thermally stable, fire resistance thermoplastic polymer composition. The process comprises providing a thermoplastic polymer and a ceramifiable filler as well as providing any desired additional additives. The thermoplastic polymer, the ceramifiable filler, and any other additional additives are mixed together in particulate form using any conventional process to mix materials together. The mixing equipment can be any suitable equipment used in the art of mixing concentrated solids. Examples of such suitable equipment for the thermally stable, fire resistant thermoplastic polymer composition include a batch mixer, such as a Brabender mixer, a Banbury mixer, etc; a single extruder, a twin screw extruder, high speed centrifugal mixers, Henschel mixers, ribbon blenders, shakers, tube rollers and the like. The thermoplastic polymer, the ceramifiable filler and any desired additives may be heated, melted and compounded together using conventional processes.

Once the thermoplastic polymer is mixed with the desired additives, it can be further processed. The thermally stable, fire resistant thermoplastic polymer composition can be extruded, injection molded, overmolded, compression molded, cast, spin cast, reaction injection molded, laminated, dispensed, potted, 3D printed, selectively printed, spread and coated to form any desirable object that is thermally stable and fire resistant.

The thermally stable, fire resistant thermoplastic polymer can be further processed for final use. The thermally stable fire resistant thermoplastic polymer can be used in a multilayer system. Furthermore, the thermally stable fire resistant thermoplastic polymer composition can include additional support layers. Examples of possible support layers include but are not limited to metallic support layers such as aluminum foils, plates and nonmetallic support layers such as polymer films and plates.

If the thermally stable, fire resistant thermoplastic polymer of the instant invention is used for 3D printing, the polymer can be pre-compounded with the ceramifiable filler and then ground to form a suitable powder. Alternatively, the thermoplastic polymer can first be ground and then mixed with the different filler packages, including the ceramifiable filler to make a powder suitable for 3D printing. In yet another alternative, the thermally stable fire resistant thermoplastic polymer of the instant invention can be manufactured in a filament format so that it is suitable for 3D printing. Any 3D printing method can be used, including but not limited to laser sintering, selective laser sintering, fused deposition modeling, fused filament fabrication and digital light processing.

There are many uses for the thermally stable, fire resistant thermoplastic polymer composition of the instant invention. For example, the thermoplastic polymer composition can be made into connectors, wires, cables, printed wire boards, or EMI shields as well as other computer components. The thermoplastic polymer composition can be used to make electronic components which meet UL 94V standards, such smart phones, electric motors, e-powertrains, batteries and battery enclosures, chargers for electric vehicles and other components of electric vehicles. The thermoplastic polymer composition can be used in construction industry in any object in which there is a possibility of a hazard of fire imitated by overheating or short circuits of electrical devices used. In addition, the thermally stable, fire resistant thermoplastic polymer composition of the instant invention can be used to form any type of housing or enclosure which needs to be fire resistant.

It is believed that when the thermally stable, fire resistant thermoplastic polymer composition with a ceramifiable filler and optional additives, is subject to fire or a high temperature (greater than or equal to 500°C), energy is released due to thermal decomposition. When the thermoplastic polymer composition is degraded by the flame or high temperature, it forms an inorganic residue, as well as charring that serves to provide good cohesion between the polymer composition and the inorganic residue. Also formed is a ceramic layer on the surface of the inorganic residue, which provides reinforcement to the residue. It is believed that this structure resulting after the thermoplastic polymer composition is degraded by the flame or high temperature prevents fire propagation by hindering transfer of heat and isolates contact between the polymer and oxygen and thereby plays a role in flame retardation and fire resistance. The structure helps the underlying thermoplastic polymer composition maintain good thermal stability and hold its insulation property. The insulation property can be electrically insulating (i.e., above 10⁶ ohm.cm volume resistivity, preferably above 10⁹ ohm.cm volume resistivity) and or thermally insulating. In addition to the insulation properties, the thermally stable fire resistant thermoplastic polymer composition retains its mechanical properties after being processed and being exposed to a high temperature or flame. The ceramic layer of the structure reinforces the shape of the object made from the thermoplastic polymer composition. In addition, it is believed that the structure absorbs soot particles leading to lower smoke levels.

FIG. 1 shows a graph of the results of a sample of the thermoplastic polymer composition of the instant invention subject to a flame temperature of 1 100°C. The 1.3 mm thick plaque was made from polypropylene with ceramifiable filler and 1%v triallyl isocyanurate (TAIC). The plaque was exposed to electron beam radiation of 300 kGy in order to obtain crosslinking. The ceramifiable filler package was 65% by weight of magnesium hydroxide, 13% by weight of calcium dihydroxide, 9% by weight of aluminum hydroxide and 13% by weight of fumed silica. The graph shows that the plaque did not crack after 10 minutes under the flame while the backside of the plaque was maintained at a temperature of 500°C. In contrast, a conventional plaque made of aluminum oxide cracked after twenty seconds. This data shows that the thermoplastic polymer composition of the instant invention is thermally stable and fire resistant.

### Examples

In the following examples set forth below, unless stated otherwise, a ceramifiable filler package comprising the following was used: 65 % by weight of magnesium hydroxide,13 % by weight of calcium dihydroxide, 9 % by weight of aluminum hydroxide and 13 % by weight of fumed silica. This ceramifiable filler was used in various thermoplastic polymer compositions and subject to fire resistant testing. For the fire resistant testing, a thermally stable fire resistant thermoplastic polymer composition was prepared into a 1 millimeter thick sample. The sample was sandwiched between two metal plates, clamped and subject to an open flame on its bottom surface, having a temperature in the range of about 1050° to about 1100° C.

In one example, the thermally stable fire resistant thermoplastic polymer composition comprised 45% by weight of polypropylene, 54% by weight of the ceramifiable filler package and 1 % by weight of TAIC. This sample was formed into a 1 millimeter thick plaque and subject to the fire resistant test described above. After 1-2 minutes, the sample fell apart. This example shows that the area which did not have contact with the flame did not form a thermally stable and fire resistant thermoplastic polymer composition.

In another example, the thermally stable fire resistant thermoplastic polymer composition comprising 45% by weight of polypropylene, 54% by weight of the ceramifiable filler package and 1 % by weight of TAIC was formed into a one millimeter thick plaque. The plaque was exposed to electron beam radiation of 300 kGy in order to obtain crosslinking. The sample was subject to the fire resistant test described above for ten minutes. After ten minutes, the plaque had not crumbled and was self-supporting.

In yet another example, the above ceramifiable filler package was used in combination with glass fiber to form a thermoplastic polymer composition. The thermally stable fire resistant composition comprised 20% by weight of polypropylene, 59% by weight of the ceramifiable filler package, 20% by weight of glass fiber and 1% by weight of TAIC. This thermoplastic polymer composition was formed into a plaque which was subject to electron beam radiation of 300 kGy. After being subject to the fire test for 10 minutes, the plaque was still intact and self-supporting.

In the next example, fumed silica was removed from the ceramifiable filler package. In this filler package, 83% by weight of magnesium hydroxide, 7 % by weight of aluminum hydroxide and 10 % by weight of calcium dihydroxide were used to form the filler. 59% by weight of this filler was added to 20% by weight of the polypropylene, 20 % by weight of a glass fiber and 1% by weight of TAIC. A plaque was formed with this material and subject to electron beam radiation of 300 kGy. The plaque was then subject to fire testing. After 10 minutes, the plaque cracked and became powdery. This example shows that fumed silica is a necessary component of the ceramifiable filler package.

In the next example, a polyamide was tested in conjunction with the ceramifiable filler package described above. A plaque was formed and then subject to the fire resistant test. After about 2-3 minutes, the sample fell and crumbled.

In yet another example, 64% by weight of a polyamide was compounded with 15% by weight of glass fiber, 20 % by weight of the ceramifiable filler package and 1% by weight of TAIC. A plaque was formed and subject to 100 kGy electron beam radiation. The plaque was then subject to the fire resistant test for ten minutes. The test showed that the plaque was self-supporting.

Another thermally stable fire resistant polymer composition was prepared. In this composition, 54% by weight of polyamide was mixed with 15% by weight of glass fiber, 30 % by weight of the ceramifiable filler package described above and 1% by weight of TAIC. This composition was formed into a plaque and subject to 100 kGy electron beam radiation. The plaque was then tested using the fire resistant test for 10 minutes. The results of the test showed that even with a 30% by weight of the ceramifiable filler package in the thermally stable fire resistant thermoplastic polymer composition, the plaque was self-supporting.

Another polyamide based thermally stable fire resistant composition was prepared using 37% by weight of the polyamide with 18% by weight of glass fiber, 44% by weight of the ceramifiable filler package and 1% by weight of TAIC. A plaque was formed and subject to 100 kGy electron beam radiation. The plaque was subject to the fire resistant test for 10 minutes. The test results showed that the plaque made of this composition was self-supporting under the flame.

Another example was conducted in which 30% glass fiber reinforced UL-94 V-0 rated commercial polyamide 6,6 was mixed with 1% weight of TAIC and then formed into a plaque via injection molding. The plaque was subject to 100 kGy electron beam radiation and the fire resistant test for 10 minutes. This test showed that although the plaque could survive the fire resistant test without the ceramifiable filler package and was self-supporting, the backside of the surface was carbonized.

In yet another example, 30% glass fiber reinforced UL-94 V-) rated commercial polyamide 6,6 was mixed with 30% by weight of glass fiber, 1 % of TAIC and a ceramifiable filler comprising 5% by weight of fumed silica and then formed into a plaque via injection molding. The thermoplastic polymer composition was formed into a plaque and subject to electron beam radiation of 100 kGy. The sample was then to the fire resistant test and showed that the sample was self-supporting even though the underside of the plaque subject to the direct flame was carbonized .

In contrast, in the next example, the ceramifiable filler package of above was added to the thermoplastic polymer composition. In this composition, 30% glass fiber reinforced polyamide 6,6 containing a flame retardant was mixed with 6.7% by weight of magnesium oxide and 3.3% by weight of fumed silica, 1% by weight of TAIC and then formed into a plaque via injection molding. The plaque was subject to electron beam radiation of 100 kGy and the fire resistant test. This example shows that the addition of the ceramifiable filler package, the underside of the plaque was not as carbonized as the previous sample. This example shows that the addition of both silica and magnesium oxide can enhance the formation of the ceramic layer.

Another series of examples using the compositions of the instant invention were conducted. In this series, the ceramifiable filler package was added to polypropylene, and polyamide 6. One millimeter plaques were made of the samples and subject to an 800° C furnace for 5 minutes. The samples all formed a dense ceramic layer, were self-supporting and maintained their shape after being tested.

One additional comparative example is provided in which a first sample of 20% by weight of polypropylene was mixed with 80% by weight of a filler package comprising magnesium hydroxide, aluminum hydroxide and calcium dihydroxide. In contrast to the first sample, a second sample included 20% by weight of polypropylene mixed with 80% by weight of the ceramifiable filler package described above. 1 millimeter plaques were made of the first and second samples and subject to an 800° C furnace for 5 minutes. The second sample with fumed silica performed better than the first sample which cracked.

One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A thermally stable, insulating fire resistant thermoplastic polymer composition comprising a polymer and additives, at least one additive comprising a ceramifiable filler, wherein the polymer composition is ceramified after being exposed to a high temperature or a flame and maintains its insulation properties.

2. The composition of claim 1, wherein said polymer is chosen from the group comprising thermoplastic polymers.

3. The composition of claim 1 or 2, wherein the ceramifiable filler comprises a fumed silica and a metal hydroxide, preferably wherein the ceramifiable filler comprises fumed silica, magnesium hydroxide, calcium hydroxide, and aluminum hydroxide.

4. The composition of any preceding claim, wherein said thermally stable fire resistant thermoplastic polymer composition includes reinforcing fillers, preferably wherein said reinforcing fillers are chosen from glass fibers, ceramic fibers, whiskers, polymer fibers, nano fibers or nano hollow fibers and blends thereof.

5. The composition of any preceding claim, wherein said thermoplastic polymer composition is crosslinked, preferably wherein said crosslinked thermoplastic polymer is crosslinked by electron beam.

6. A process for forming a thermally stable, fire resistant thermoplastic polymer composition comprising mixing a polymer with additives, including a ceramifiable filler.

7. The process set forth in claim 6, wherein said polymer is chosen from the group comprising thermoplastic polymers.

8. The process of claim 6 or 7, wherein said ceramifiable filler comprises fumed silica and a metal hydroxide, preferably wherein said ceramifiable filler comprises fumed silica, magnesium hydroxide, calcium hydroxide and aluminum hydroxide.

9. An object made from a thermally stable fire resistant thermoplastic polymer composition comprising a thermoplastic polymer with a ceramifiable filler, wherein said object may be subject to high temperatures or flames.

10. The object of claim 9, wherein said thermally stable fire resistant thermoplastic polymer is a crosslinked.

11. The object of claim 9 or 10, wherein said ceramifiable filler comprises fumed silica and a metal hydroxide, preferably wherein said ceramifiable filler comprises fumed silica, magnesium hydroxide, calcium hydroxide, and aluminum hydroxide.

12. The object of claim 9, 10 or 11 wherein the thermoplastic polymer is a polyamide.

13. A battery enclosure made from a thermally stable fire resistant thermoplastic polymer composition comprising a polymer with a ceramifiable filler.

14. The battery enclosure of claim 13, wherein said polymer is chosen from the group comprising thermoplastic polymers.

15. The battery enclosure of claim 13 or 14, wherein said ceramifiable filler comprises fumed silica and a metal hydroxide.
